# EUROPÄISCHE PATENTANMELDUNG

(11) **EP 1 336 642 A1**
(43) Veröffentlichungstag der Anmeldung: **20.08.2003**
(21) Anmeldenummer: 02405112.0
(22) Anmeldetag: 14.02.2002
(51) Int. Cl.: C08L 63/00

(54) **Selbstheilende Vergussmassen für die Herstellung von elektrischen Isolierungen**

(71) Anmelder: ABB RESEARCH LTD., 8050 Zürich (CH)
(72) Erfinder: Dirix, Yvo,, 8057 Zürich (CH); Meier, Patrick,, 5600 Lenzburg (CH); Tilliette, Vincent,, 83220 Le Pradet (FR)
(74) Vertreter: ABB Patent Attorneys

(57) **Zusammenfassung**

Vergussmasse auf der Basis eines duroplastisch härtbaren Epoxidharzes oder eines Gemisches solcher Harze, wobei diese Vergussmasse in gleichmässiger Verteilung eine Siloxanverbindung, mit mindestens einem Substituenten, der einen mit Epoxid modifizierten organischen Ring aufweist, vorzugsweise mit mindestens zwei solcher Substituenten oder ein Gemisch solcher Siloxanverbindungen, in Form eines Zweiphasensystems, enthält; Verwendung dieser Vergussmasse zur Herstellung von elektrischen Isolierungen und Bauteilen sowie die derart hergestellten hergestellten elektrischen Isolierungen und Bauteile.

## Beschreibung

### Geltungsbereich

Die vorliegende Erfindung betrifft Vergussmassen auf der Basis duroplastisch härtbarer Epoxidharze für die Herstellung von Formteilen und Beschichtungen, wie beispielsweise selbstheilenden elektrischen Isolierungen, insbesondere in Form von Formteilen und Beschichtungen auf dem Gebiet der Hochspannungsisolierungen für den Freilufteinsatz, aber auch von Klebstoffen oder mit Fasern verstärkte Kunststoffe sowie die erfindungsgemäss hergestellten Formteile und Beschichtungen.

### Technisches Gebiet

Hochspannungsisolierungen auf Basis duroplastisch härtbarer Epoxidharze für den Freilufteinsatz sind an sich bekannt. Für Freiluftanwendungen werden traditionell Isolatoren auf Basis der Materialien Glas und Keramik eingesetzt. Dabei kommen Freiluftisolatoren in grossen Stückzahlen bei Hochspannungsleitungen, als auch im Mittelspannungsbereich, vor allem als Stützisolatoren, zum Einsatz. Weitere Anwendungsgebiete sind Freiluft-Leistungschalter, Messwandler, Durchführungen, Ableiter sowie im Schaltanlagenbau.

In den letzten Jahren wurden vermehrt auch polymere Werkstoffe, wie beispielsweise Giessharzsysteme auf Basis von duroplastisch härtbaren Epoxidharzen eingesetzt. Von den polymeren Werkstoffen haben jedoch nur Silikone allgemeine technische Akzeptanz gefunden, da Silikone infolge ihrer inhärenten und ausgeprägten Hydrophobie, und insbesondere infolge der inhärenten Hydrophobiewiedekehr, den andern polymeren Werkstoffen überlegen sind.

Giessharzsysteme auf Basis von Epoxidharzen besitzen keine intrinsische Hydrophobiewiederkehr und weisen zudem eine vergleichsweise niedrigere Hydrophobie auf. Deshalb ist der Einsatz von Epoxidharzen und verwandten Materialien vorwiegend auf die Anwendung in Innenräumen beschränkt. Es besteht deshalb das Bedürfnis diese Giessharzsysteme derart zu verbessern, dass diese für die Herstellung von elektrischen Isolierungen geeignet sind und eine erhöhte Hydrophobie sowie gleichzeitig auch die Eigenschaft der Hydrophobiewiederkehr aufweisen, ohne dass deren gute mechanische Eigenschaften merklich verändert bzw. geschwächt werden. Derart könnten preisgünstige Epoxidharze für die Herstellung von elektrischen Isolierungen verwendet werden.

### Stand der Technik

Es wurde bereits vorgeschlagen, die guten elektrischen Eigenschaften von Silikonen, wie z.B. von Dimethylsiloxanen, mit den Eigenschaften von Epoxidharzen zu verbinden, bzw. Silikone den Epoxidharzen zuzusetzen. Siloxanverbindungen mit sehr niedriger Oberflächenenergie und Epoxidverbindungen sind in der Regel nicht genügend mit einander mischbar, so dass Stabilisatoren wie oberflächenaktive Mittel oder Mittel, welche die Viskosität des Systems erhöhen, beigemischt werden. Die Stabilisatoren stabilisieren zwar die Zweiphasen Morphologie des Systems, so dass diese auch nach der Härtung im System erhalten bleibt, sie senken aber die Glasübergangstemperatur des Systems.

In US 5,306,747 wird vorgeschlagen, ein endständig mit Hydroxyphenylgruppen versehenes Silikonöl chemisch in die Epoxidharzmatrix einzubinden. Der Hauptnachteil dieser Methode liegt, wie in der Patentschrift beschrieben, in den schlechteren mechanischen Eigenschaften der Matrix, insbesondere bei grösserer Kettenlänge des eingebrachten Silikonöls. In WO 98/32138 wird vorgeschlagen, der Epoxidmatrix ein mit Glycidylgruppen modifiziertes Polysiloxan zuzugeben, welches bei der Härtung in die Matrix einpolymerisiert. WO 98/32138 hat den Nachteil, dass die einzubringenden Polysiloxane auf solche mit vergleichsweise niedrigem Molekulargewicht begrenzt ist.

### Darstellung der Erfindung

Es wurde nun gefunden, dass Vergussmassen auf Basis polymerer Epoxidharze, welche für die Herstellung von selbstheilenden elektrischen Isolierungen geeignet sind, erhalten werden, wenn man den polymeren Epoxidharzen vor deren Härtung eine im weiteren definierte Siloxanverbindung, welche mindestens einen Substituenten aufweist, der einen mit Epoxid modifiziertem organischen Ring enthält, oder ein Gemisch solcher Siloxanverbindungen, zusetzt. Dabei bildet sich nach dem Mischen der Komponenten ein Zweiphasensystem, welches sich bis nach der Härtung aufrecht erhält und die gleichmässig verteilte Silikonverbindung in Tröpfchenform die zweite Phase bildet. Da sich die Silikonverbindung mit der Matrix chemisch verbindet und in dieser auch teilweise löslich ist, entsteht ein Produkt mit sehr guten Eigenschaften. Dabei bildet die Silikonverbindung Tröpfchen mit einem durchschnittlichen Durchmesser im Bereich von 5 bis 15 Mikrometer (µm). Gehärtete Vergussmassen auf Basis solcher erfindungsgemässen Epoxidharze können ohne die Zugabe von Emulgatoren hergestellt werden. Die im weiteren definierten Siloxanverbindungen, welche mindestens einen Substituenten und vorzugsweise mindestens zwei Substituenten aufweisen, die einen mit Epoxid modifizierten organischen Ring enthalten, zeigen nicht nur eine niedrige Oberflächenenergie sondern bilden überraschenderweise mit dem Epoxidharz beim Mischen eine Emulsion, wobei keine oberflächenaktiven Mittel zugesetzt werden müssen. Dabei wird eine ausgezeichnete Zweiphasen Morphologie auch im gehärteten System erhalten. Die gehärteten Systeme gemäss der vorliegenden Erfindung zeigen eine deutlich erhöhte Hydrophobie sowie eine deutlich erhöhte Hydrophobiewiederkehr.

Die vorliegende Erfindung ist in den Patentansprüchen definiert. Insbesondere betrifft die vorliegende Erfindung eine flüssige oder pastöse Vergussmasse auf der Basis eines duroplastisch härtbaren Epoxidharzes oder eines Gemisches solcher Harze, welche für die Herstellung von selbstheilenden elektrischen Isolierungen geeignet und dadurch gekennzeichnet ist, dass die Vergussmasse in gleichmässiger Verteilung eine Siloxanverbindung, mit mindestens einem Substituenten, der einen mit Epoxid modifizierten organischen Ring aufweist oder ein Gemisch solcher Siloxanverbindungen, in Form eines Zweiphasensystems enthält.

Bevorzugt ist eine Vergussmasse, welche in gleichmässiger Verteilung eine Siloxanverbindung, mit mindestens zwei Substituenten, die einen mit Epoxid modifizierten organischen Ring aufweisen oder ein Gemisch solcher Siloxanverbindungen, in Form eines Zweiphasensystems, enthält.

Die erfindungsgemässen Vergussmassen sind besonders für die Herstellung von Formteilen und Beschichtungen auf dem Gebiet der elektrischen Isolierungen, insbesondere Hochspannungsisolierungen, insbesondere für den Freilufteinsatz, sowie für zahlreiche andere Einsätze, geeignet.

In diesem Sinne betrifft die vorliegende Erfindung die Verwendung der erfindungsgemässen Vergussmassen für die Herstellung von Formteilen und Beschichtungen auf dem Gebiet der elektrischen Isolierungen, insbesondere Hochspannungsisolierungen, insbesondere Hochspannungsisolierungen für den Freilufteinsatz, sowie für zahlreiche andere Einsätze, wie dies im weiteren beschrieben ist.

Die Erfindung betrifft im weiteren die aus den erfindungsgemässen Vergussmassen hergestellten Formteile, Beschichtungen und Isolierungen. Die Erfindung betrifft im weiteren ein Verfahren zur Herstellung der erfindungsgemässen Vergussmassen.

Die modifizierte Siloxanverbindung, welche mindestens zwei Substituenten mit einem mit Epoxid modifizierten organischen Ring enthält, entspricht vorzugsweise der allgemeinen Formel (I) : 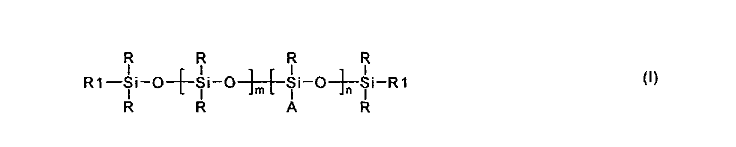 worin
- R: einen Alkylrest mit 1-4 C-Atomen, oder Phenyl, vorzugsweise Methyl,
- R₁: unabhängig von einander eine der Bedeutungen von R oder A, oder zwei endständige R₁ die direkte Bindung (entsprechend einer cyclischen Verbindung),
- A: ein Substituent, der einen mit Epoxid modifizierten organischen Ring aufweist, vorzugsweise ein Epoxycyclohexylethylrest, Epoxycyclohexylpropylrest, Epoxycyclohexylethyl-O-(CH₂)₁₋₄-rest, Epoxycyclohexylpropyl-O-(CH₂)₁₋₄-rest, Epoxycyclohexylethyl-C(O)O-(CH₂)₁₋₄-rest, oder Epoxycyclohexylpropyl-C(O)O-(CH₂)₁₋₄-rest,
- m: eine ganze Zahl von 100-1000, vorzugsweise eine ganze Zahl von 400-800, und vorzugsweise etwa 500;
- n: Null oder eine ganze Zahl von 1-20, vorzugsweise 5-15 UND VORZUGSWEISE ETWA 10, bedeuten,
wobei (i) im Molekül mindestens ein Rest A vorhanden ist und (ii) die Gruppen [-Si(R)(R)O-] und [-Si(R)(A)O-] im Molekül in beliebiger Reihenfolge angeordnet sind. Vorzugsweise sind mindestens zwei Reste A pro Molekül anwesend.

A bedeutet vorzugsweise einen (2,3)-, (3,4)- oder (4,5)-Epoxycyclohexylethylrest der Formeln (IIa), (IIb) oder (IIc) oder einen (2,3)-, (3,4)- oder (4,5)-Epoxycyclohexylpropylrest der Formeln (IId), (IIe) oder (IIf):

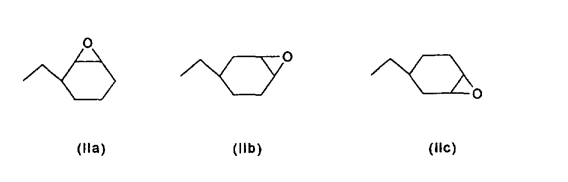

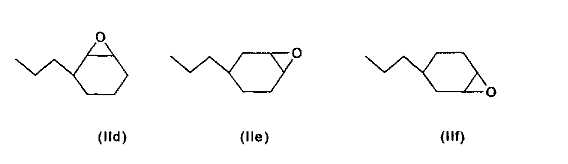

Bevorzugt sind der (2,3)-Epoxycyclohexylethylrest und der (2,3)-Epoxycyclohexylpropylrest, insbesondere der (2,3)-Epoxycyclohexylethylrest. Der mit Epoxid modifizierte organische Ring kann auch Cylohexendiepoxid bedeuten.

In den Resten Epoxycyclohexylethyl-O-(CH₂)₁₋₄-, Epoxycyclohexylpropyl-O-(CH₂)₁₋₄-, Epoxycyclohexylethyl-C(O)O-(CH₂)₁₋₄-, und Epoxycyclohexylpropyl-C(O)O-(CH₂)₁₋₄-, bedeutet jeweils der Epoxycyclohexylrest (2,3)-, (3,4)- oder (4,5)-Epoxycyclohexyl, vorzugsweise (2,3)-Epoxycyclohexyl.

Ist die Verbindung der Formel (I) eine cyclische Verbindung, so ist diese aus -[Si(R)(R)O]- und/oder -[Si(R)(A)O]-Einheiten, zusammengesetzt, welche einen Ring mit vorzugsweise 4 bis 12 solcher Einheiten bilden. Von den ringförmigen Siloxanen sind jedoch die ringförmigen Polysiloxane mit 4 bis 8 Siloxy-Einheiten bevorzugt, insbesondere zwei oder drei -[Si(R)(A)O]-Einheiten enthaltende Polydimethylsiloxane mit vier bis acht Siloxy-Einheiten.

Die Herstellung der Verbindungen der Formel (I) ist an sich bekannt oder die Verbindungen können gemäss bekannten analogen Verfahren hergestellt werden. Die Verbindung der Formel (I) stellt in der Regel ein Gemisch von Verbindungen der Formel (I) dar, was dem Fachmann bekannt ist. Vorzugsweise enthält das Gemisch auch cyclische Verbindungen. Vorzugsweise weist das Gemisch jeweils auch einen Gehalt von bis zu 10 Gew.-%, vorzugsweise etwa 6-8 Gew.-% an cyclischen Verbindungen auf, welche nur aus -[Si(R) (R)O]-Einheiten, zusammengesetzt sind, wie cyclische Dimethylsiloxane mit 4-12 Dimethylsiloxyeinheiten, vorzugsweise solche mit 4 oder 5 Dimethylsiloxyeinheiten.

Die erfindungsgemässe Vergussmasse enthält die Polysiloxanverbindung, welche mindestens zwei Substituenten, die einen mit Epoxid modifizierten organischen Ring aufweisen, oder ein Gemisch solcher Polysiloxanverbindungen, in einer Menge von etwa 1-20 Gew.-%, vorzugsweise etwa 5-15 Gew.-% und insbesondere in einer Menge von etwa 6-12 Gew.-%, bezogen auf das Gesamtgewicht des in der Mischung anwesenden Epoxidharzes, d.h. bezogen auf das Gesamtgewicht aller in der Vergussmasse anwesenden Verbindungen, welche mindestens eine Epoxidgruppe pro Molekül aufweisen.

Als Vergussmassen in flüssiger oder pastöser Form kommen erfindungsgemäss duroplastisch härtbare Epoxid-Vergussmassen in Frage. Diese bestehen in der Regel aus dem Epoxidharz, dem Härter und gegebenenfalls dem Beschleuniger sowie weiteren Zusatzstoffen. Bevorzugt sind Epoxidharze mit guten elektrischen Eigenschaften, vorzugsweise auf der Basis von aromatische und/oder cycloaliphatischen Epoxidharzen.

Als Epoxidharz sind vernetzend wirkende Glycidylverbindungen, welche mindestens zwei 1,2-Epoxidgruppen im Molekül aufweisen, bevorzugt. Vorzugsweise verwendet man ein Gemisch von Polyglycidylverbindungen, beispielsweise ein Gemisch von Diglycidyl- und Triglycidylverbindungen. Solche Verbindungen sind an sich bekannt und in der Literatur ausführlich beschrieben. In der Regel kann aus den bekannten Glycidylverbindungen eine für die vorgesehene elektrische Anwendung geeignete Auswahl getroffen werden, was für den Fachmann ein Optimierungsproblem darstellt.

Geeignete Glycidylverbindungen sind beispielsweise in EP-A-0 297 030 beschrieben. Diese umfassen Verbindungen, die unsubstituierte Glycidylgruppen und/oder mit Methylgruppen substituierte Glycidylgruppen aufweisen. Die Glycidylverbindungen haben vorzugsweise ein Molekulargewicht zwischen 200 und 1200, insbesondere zwischen 200 und 1000 und können fest oder flüssig sein. Ihr Epoxidgehalt beträgt vorzugsweise mindestens drei Äquivalente pro Kilogramm der Verbindung, vorzugsweise mindestens vier Äquivalente pro Kilogramm und insbesondere mindestens fünf Äquivalente pro Kilogramm. Bevorzugt sind Glycidylverbindungen, die Glycidylether- und/oder Glycidylestergruppen aufweisen. Eine Glycidylverbindung kann dabei auch beide Arten von Glycidylgruppen enthalten, wie z.B. 4-Glycidyloxy-benzoesäureglycidylester. Bevorzugt sind Polyglycidylester mit 1-4 Glycidylestergruppen, insbesondere Diglycidylester und/oder Triglycidylester. Die bevorzugten Diglycidylester leiten sich vorzugsweise von aromatischen, araliphatischen, cycloaliphatischen, heterocyclischen, heterocyclisch-aliphatischen oder heterocyclisch-aromatischen Dicarbonsäuren mit 6 bis 20, insbesondere 6 bis 12 Ringkohlenstoffatomen oder von aliphatischen Dicarbonsäuren mit 2 bis 10 Kohlenstoffatomen ab. Solche Verbindung sind beispielsweise unter dem Handelsnamen Araldit® (Ciba SC AG) kommerziell erhältlich. Bevorzugt sind beispielsweise die an sich bekannten Epoxidharze auf Basis mehrwertiger aromatischer oder cycloaliphatischer Hydroxylverbindungen.
Insbesondere geeignet sind gegebenenfalls substituierte Epoxidharze der Formel (III): 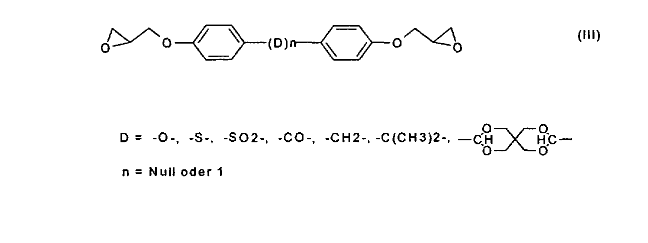 auf der Basis von aromatischen Hydroxylverbindungen. Beispiele sind Glycidylether von Bisphenol A oder Bisphenol F sowie die Glycidylether von Phenol-Novolak-Harzen oder Kresol-Novolak-Harzen.

Cycloaliphatische Epoxidharze sind z.B. bis-epoxidierter 1,2,3,6-Tetrahydrobenzoesäure-beta-1',2',3',6'-tetrahydrophenylethylester, Hexahydro-o-phthalsäure-bis-glycidylester. Auch aliphatische Epoxidharze, wie z.B. 1,4-Butandioldiglycidylether, sind für die erfindungsgemässe Verwendung geeignet.

Bevorzugte Epoxidharze mit guten elektrischen Eigenschaften sind auch aromatische und/oder cycloaliphatische Epoxidharze, welche mindestens eine Aminoglycidylgruppe im Molekül enthalten. Solche in der Elektroindustrie verwendeten Epoxidharze sind an sich aus der Literatur bekannt und beispielsweise in WO 99/67315 beschrieben. Bevorzugt sind Verbindungen der allgemeinen Formel (IV):

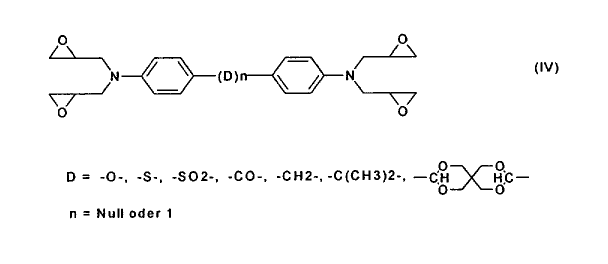

Besonders geeignete Aminoglycidylverbindungen sind N,N-Diglycidylanilin, N,N-Diglycidyltoluidin, N,N,N',N'-Tetraglycidyl-1,3-diaminobenzol, N,N,N',N'-Tetraglycidyl-1,4-diaminobenzol, N,N,N',N'-Tetraglycidylxylylendiamin, N,N,N',N'-Tetraglycidyl-4,4'-diaminodiphenylmethan, N,N,N',N'-Tetraglycidyl-3,3'diethyl-4,4'-diaminodiphenylmethan, N,N,N',N'-Tetraglycidyl-3,3'-diaminodiphenylsulfon, N,N'-Dimethyl-N,N'-diglycidyl-4,4'-diaminodiphenylmethan, N,N,N',N'-Tetraglycidyl-alfa,alfa'-bis(4-aminophenyl)-p-diisopropylbenzol und N,N,N',N'-Tetraglycidyl-alfa,alfa'-bis-(3,5-dimethyl-4-aminophenyl)-p-diisopropylbenzol. Bevorzugte Aminoglycidylverbindungen entsprechen auch der Formel (V): 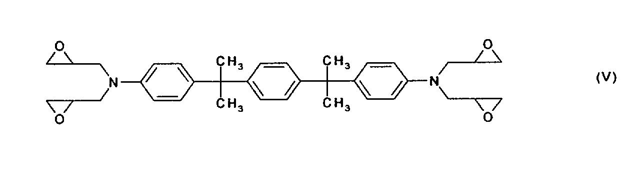 oder der Formel (VI):

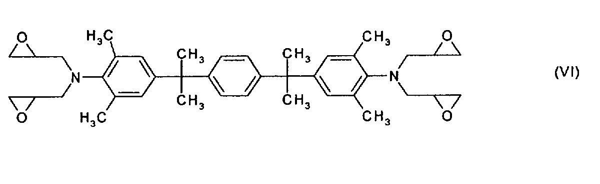

Geeignete Polyglycidylverbindungen von Aminophenolen sind auch O,N,N-Triglycidyl-4-aminophenol, O,N,N-Triglycidyl-3-aminophenol und 2,2-(N,N-Diglycidyl-4-aminopheny-1,4'-glycidyloxyphenyl)-propan. Weitere Aminoglycidylverbindungen, die erfindungsgemäss eingesetzt werden können, sind beschrieben in Houben-Weyl, Methoden der Organischen Chemie, Band E20, Makromolekulare Stoffe, Georg Thieme Verlag Stuttgart, 1987, Seiten 1926-1928. Die tri- und tetrafunktionellen Aminoglycidylverbindungen können beispielsweise nach den in den US 2 884 406 A und EP 0 148 117 A beschriebenen Verfahren hergestellt werden.

Als Härter verwendet man an sich bekannte hydroxylhaltige Verbindungen und/oder carboxylhaltige Polymere, insbesondere carboxylterminierte Polyester und/oder carboxylhaltige Acrylat- und/oder Methacrylatpolymere und/oder Carbonsäureanhydride. Solche Härter sind an sich bekannt. Geeignete Härter sind auch cyclische Anhydride von aromatischen, aliphatischen, cycloaliphatischen und heterocyclischen Polycarbonsäuren. Besonders geeignete Anhydride von aromatischen Polycarbonsäuren sind Phthalsäureanhydrid und deren substituierte Derivate, Benzol-1,2,4,5-tetracarbonsäuredianhydrid (Pyromellithsäuredianhydrid) und deren substituierte Derivate, sowie Verbindungen der Formel (VII):

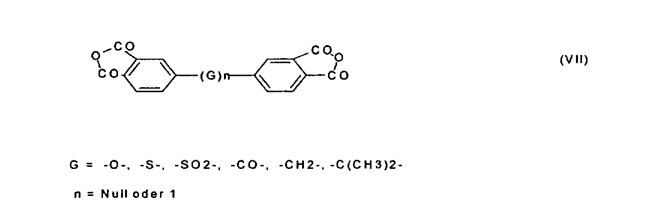

Als Härter geeignete Anhydride sind beispielsweise Phthalsäureanhydrid, 4-Methylphthalsäureanhydrid, 3,6-Dichlorphthalsäureanhydrid, 4,5-Dichlorphthalsäureanhydrid, 3,6-Difluorphthalsäureanhydrid. Tetrabrom-, Tetrachlor- und Tetrafluorphthalsäureanhydrid, 3-Nitro- und 4-Nitro-phthalsäureanhydrid, Benzol-1,2,4,5-tetracarbonsäuredianhydrid (Pyromellithsäuredianhydrid), 3,3',4,4'-Benzophenontetracarbonsäuredianhydrid, 2,2-Bis(3,4-benzoldicarboxyphenyl)propandianhydrid, 2,2-Bis(2,3-benzoldicarboxyphenyl)-propandianhydrid, 2,2-Bis(4,4-benzoldicarbonsäureanhydrid)perfluorpropan, Bis(3,4-dicarboxyphenyl)etherdianhydrid, Bis(3,4-dicarboxylphenyl)methandianhydrid, 2,2',3,3-Diphenyltetracarbonsäuredianhydrid und 3,3',4,4'-Diphenyltetracarbonsäuredianhydrid. Die aromatischen Carbonsäureanhydride können zusätzliche funktionelle Gruppen enthalten. Beispiele sind Benzol-1,2,4-tricarbonsäure-anhydrid (Trimellithsäureanhydrid), 3-Hydroxyphthalsäureanhydrid, 3- bzw. 4-Maleinimidophthalsäureanhydrid sowie das 2-Sulfobenzoesäure-cycloanhydrid. Geeignet sind auch Derivate des Trimellithsäureanhydrids wie z.B. das Bistrimellithsäureanhydrid des Neopentylglykols.

Ebenso sind aromatische Carbonsäureanhydride mit kondensierten Ringsystemen geeignet, wie z.B. 1,8-Naphthalsäureanhydrid, Naphthalin-1,4,5,8-tetracarbonsäuredianhydrid, Naphthalin-1,2,5,6-tetracarbonsäuredianhydrid, Naphthalin-3,4,5,8-tetracarbonsäuredianhydrid, Naphthalin-2,3,6,7-tetracarbonsäuredianhydrid, 3,4,9,10-Perylentetracarbonsäuredianhydrid und ihre Halogen und Nitroderivate.

Besonders bevorzugt ist Maleinsäureanhydrid und Derivate von Maleinsäureanhydrid. Diese sind als alleiniges Härtungsmittel für Aminoglycidylharze und für ihre Mischungen mit anderen Epoxidharzen verwendbar.

An sich bekannte Cycloaliphatische Dicarbonsäureanhydride, wie z.B. cis-Cyclohexan-1,2-dicarbonsäureanhydrid und verwandte Verbindungen, bicyclische Verbindungen, wie bicyclische cycloaliphatische Dicarbonsäureanhydride, heterocyclische Carbonsäureanhydride, können ebenso verwendet werden.

Das Härtungsmittel verwendete man in an sich bekannten Konzentrationen im Bereich von 0,2 bis 1,2 Äquivalenten der reaktiven Härtergruppe, z.B. Anhydridgruppe, per 1 Epoxidäquivalent eingesetzt.

Die erfindungsgemässen härtbaren Mischungen können Zusatzstoffe, wie an sich bekannte Beschleuniger, Füllstoffe, Plastifizierungsmittel, Elastifizierungsmittel, Verstärkungsfasern sowie Flammschutzmittel und/oder Farbstoffe enthalten. Bevorzugt kommen Vergussmassen zum Einsatz, welche mindestens einen Füllstoff enthalten. Solche Füllstoffe sind vorzugsweise Quarzmehl, Aluminiumoxid und/oder Dolomite in verschiedenen an sich bekannten Mahlungen. Die Füllstoffe sind bevorzugt mit einer Silanisierung versehen, um eine optimale chemische Anbindung der Partikel in der Harzmatrix zu gewährleisten.

Für die Herstellung der erfindungsgemässen Vergussmasse kann man das Epoxidharz, den Härter, und die Siloxanverbindung, welche mindestens zwei Substituenten, die einen mit Epoxid modifizierten organischen Ring aufweisen, sowie gegebenenfalls anwesende Additive, wie Beschleuniger, Füllstoffe und weitere Zusatzstoffe, in beliebiger Reihenfolge mischen. Vorzugsweise mischt man die Siloxanverbindung, welche mindestens zwei Substituenten, die einen mit Epoxid modifizierten organischen Ring aufweisen, zuerst mit dem Epoxidharz und stellt anschliessend mit dieser Vormischung die Vergussmasse her. Die Vormischung wirkt sich positiv auf die Verteilung des Polysiloxans in der Vergussmasse und somit auch auf die physikalischen und mechanischen Eigenschaften des gehärteten Produktes aus.

Die Härtung der erfindungsgemässen Vergussmasse erfolgt bei an sich bekannten Temperaturen, vorzugsweise im Bereich von 50°C bis 180°C, vorzugsweise bei 80°C bis 120°C. Die Härtung der erfindungsgemässen Vergussmasse ist aber in der Regel auch bei niedrigeren Temperaturen möglich, z.B. bei Raumtemperatur, wobei bei einer Aushärtung bei Raumtemperatur ein Zeitraum von wenigen Tagen bis zu wenigen Wochen nötig ist, um eine vollständige Aushärtung zu erreichen.

Die erfindungsgemässen Vergussmassen werden insbesondere für die Herstellung von Hochspannungsisolierung für den Freilufteinsatz verwendet, insbesondere für die Herstellung von Freiluftisolatoren bei Hochspannungsleitungen als Langstab-, Verbund- und Kappenisolatoren sowie für Stützisolatoren im Mittelspannungsbereich. Die erfindungsgemässen Vergussmassen können auch in der Herstellung Isolierungen bei Freiluft-Leistungschaltern, Messwandlern, Durchführungen und Ableitern, im Schaltanlagenbau, in Leistungsschaltern, Trockentransformatoren und elektrischen Maschinen, Verwendung finden. Im weiteren können die erfindungsgemässen Vergussmassen auch als Beschichtungsmaterialien für Transistoren und andere Halbleiterelemente und ganz allgemein zum Imprägnieren von elektrischen Bauteilen verwendet werden. Ebenso kann die erfindungsgemässe Vergussmasse als Klebstoff, als Matrixharz für faserverstärkte Kunststoffe, als Korrosionsschutz für metallische Bauteile, z.B. für Brücken und Industrieanlagen, verwendet werden, wobei beispielsweise der Glanz der Schicht auch mit der Alterung nicht verloren geht. Die folgenden Beispiele erläutern die Erfindung.

### Beispiel 1

A) Ein Gemisch von 12.7 Teilen des cycloaliphatischen Epoxidharzes CY184 der Firma Vantico Ltd. und 8.1 Teile der Epoxidverbindung CY 221 der Firma Vantico Ltd. (auch als Flexibilizer bezeichnet) werden mit 1.9 Teilen einer Verbindung der Formel (I), d.h. einem Dimethylsiloxan mit durchschnittlich etwa 500 Siloxyeinheiten und durchschnittlich etwa zehn Epoxycyclohexylethylresten pro Molekül (Silicone Fluid L-9300 der Firma Witco S.A.), gut durchmischt. Diese Mischung wird nun mit 26.1 Teilen Hexahydrophtalsäureanhydrid (Anhydridhärter HT 907 der Firma Vantico Ltd.) in einem Ultra-Turrax Hochgeschwindigkeits-Mischer bis zur gleichmässigen Verteilung gemischt. Es werden keine Stabilisatoren zugesetzt. Die derart erhaltene Vergussmasse ist ein bei Raumtemperatur stabiles Zweiphasensystem. Die Vergussmasse wird nun in einem Rezipienten evakuiert und in eine auf 80°C heisse Giessform unter Vakuum vergossen. Nach einer Gelierzeit von 6 Stunden bei 80°C werden die Prüfkörper der Giessform entnommen und bei 140°C während 10 Stunden nachgehärtet. Die Analyse mittels Scanning Electron Mikroskopie (SEM) zeigt, dass die Zweiphasenmorpholgie erhalten geblieben ist. Dabei erhält man eine 4 mm dicke Platte, welche zu Prüfkörpern verarbeitet wird. Die Epoxidharzformulierung kann mit einem Füllmaterial, z.B. silanisiertes Quarzmehl, in einer Menge von beispielsweise bis 65 Gew.-% befüllt werden. Darauf wird in diesem Beispiel für Prüfungszwecke verzichtet.
B) Abschnitt A) von Beispiel 1 wird wiederholt, mit der Massgabe, dass der Gehalt an der Siloxanverbindung variiert wird und zwar jeweils ein Gehalt von 4 Gew.-%, 5 Gew.-%, 7 Gew.-%, 8 Gew.-%, 9 Gew.-%, 10 Gew.-%, 11 Gew.-% und 12 Gew.-%, wobei die Zugabemenge des Härters entsprechend geändert wird. Analoge Resultate zu Beispiel 1, Abschnitt A) werden erhalten.

### Beispiel 2 (Vergleich)

20.8 Teile des cycloaliphatischen Epoxidharzes CY184 der Firma Vantico Ltd. werden vorgelegt und gemäss Beispiel 1, Absatz A), behandelt, wobei auf die Zugabe des mit Epoxidgruppen modifizierten Polysiloxans verzichtet wird. Die Menge des Härters wird entsprechend reduziert. Das Härtungsverfahren ist gleich wie in Beispiel 1, Absatz A) beschrieben.

### Testmethode

Die Testmethode für die Messung der Hydrophobie, des Hydrophobieerhalts und der Hydrohobiewiederkehr bzw. der Erstellung der Vergleichsresultate zwischen dem (i) aus gehärteten Giessharz mit Zusatz des modifizierten Polysiloxans gemäss Beispiel 1, Absatz A), und (ii) aus gehärteten Giessharz ohne Zusatz eines Polysiloxans und ohne CY 221 gemäss Beispiel 2, ist wie folgt.

Zur Prüfung des elektrischen Verhaltens werden die Prüfkörper einer elektrischen Corona-Entladung während einer Zeitdauer von mindestens 20 Minuten ausgesetzt. Dabei wird vorübergehend die Oberflächenhydrophobie vermindert oder gänzlich zerstört, worauf anschliessend eine Hydrophobieerholung einsetzt. Die Hydrophobie wird in an sich bekannter Weise mit dem dynamischen Vorrückwinkel mit Wasser in Graden gemessen. Je grösser der Vorrückwinkel, umso höher die Hydrophobie. Die gemessenen dynamischen Vorrückwinkel für erfindungsgemäss gehärtete Vergussmassen bzw. Prüfkörper gemäss Beispiel 1, Absatz A), sowie die Vergleichswerte für die vergleichbaren konventionellen Prüfkörper gemäss den Beispielen 3 und 4 sind in Tabelle 1 aufgeführt.

**Tabelle 1**

| | Dynamischer Vorrückwinkel (Wasser, in °) Prüfkörper aus Beispiel 1 | Dynamischer Vorrückwinkel (Wasser, in °) Prüfkörper aus Beispiel 2 |
|---|---|---|
| Grundhydrophobie (ohne Corona-Entladung) | 112 | 99 |
| Hydrophobie nach 2 h | 87 | 51 |
| Hydrophobie nach 25 h | 103 | 58 |
| Hydrophobie nach 50 h | 99 | 56 |
| Hydrophobie nach 120 h | 104 | 58 |

## Patentansprüche

1. Vergussmasse auf der Basis eines duroplastisch härtbaren Epoxidharzes oder eines Gemisches solcher Harze, **dadurch gekennzeichnet, dass** diese Vergussmasse in gleichmässiger Verteilung eine Siloxanverbindung, mit mindestens einem Substituenten, der einen mit Epoxid modifizierten organischen Ring aufweist, oder ein Gemisch solcher Siloxanverbindungen, in Form eines Zweiphasensystems, enthält

2. Vergussmasse nach Anspruch 1, **dadurch gekennzeichnet, dass** die Siloxanverbindung der allgemeinen Formel (I): 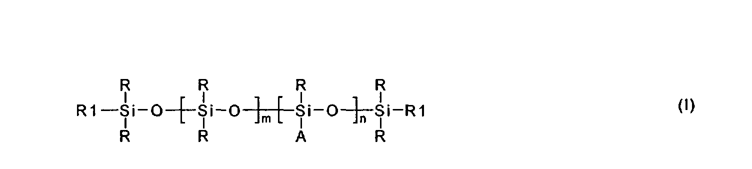 entspricht, worin
R einen Alkylrest mit 1-4 C-Atomen, oder Phenyl, vorzugsweise Methyl,
R₁ unabhängig von einander eine der Bedeutungen von R oder A, oder zwei endständige R₁ die direkte Bindung (entsprechend einer cyclischen Verbindung),
A ein Substituent, der einen mit Epoxid modifizierten organischen Ring aufweist, vorzugsweise ein Epoxycyclohexylethylrest, Epoxycyclohexylpropylrest, Epoxycyclohexylethyl-O-(CH₂)₁₋₄-rest, Epoxycyclohexylpropyl-O-(CH₂)₁₋₄-rest, Epoxycyclohexylethyl-C(O)O-(CH₂)₁₋₄-rest, oder Epoxycyclohexylpropyl-C(O)O-(CH₂)₁₋₄-rest,
m eine ganze Zahl von 100-1000, vorzugsweise eine ganze Zahl von 400-800, und vorzugsweise etwa 500,
n Null oder eine ganze Zahl von 1-20, vorzugsweise 5-15 und vorzugsweise etwa 10, bedeuten,
wobei (i) im Molekül mindestens ein Rest A vorhanden ist und (ii) die Gruppen [-Si(R)(R)O-] und [-Si(R)(A)O-] im Molekül in beliebiger Reihenfolge angeordnet sind.

3. Vergussmasse nach Anspruch 1 oder 2, **dadurch gekennzeichnet, dass** die Polysiloxanverbindung mindestens zwei Reste A enthält.

4. Vergussmasse nach Anspruch 2 oder 3, **dadurch gekennzeichnet, dass** A (2,3)-, (3,4)- oder (4,5)-Epoxycyclohexylethyl, oder (2,3)-, (3,4)- oder (4,5)-Epoxycyclohexylpropyl, vorzugsweise (2,3)-Epoxycyclohexylethyl oder (2,3)-Epoxycyclohexylpropyl, insbesondere (2,3)-Epoxycyclohexylethyl, bedeutet.

5. Vergussmasse nach Anspruch 1 oder 2, **dadurch gekennzeichnet, dass** der mit Epoxid modifizierte organische Ring einen Cylohexendiepoxidring bedeutet.

6. Vergussmasse nach Anspruch 2, **dadurch gekennzeichnet, dass** die Verbindung der Formel (I) eine cyclische Verbindung darstellt, welche aus -[Si(R)(R)O]- und/oder -[Si(R)(A)O]-Einheiten, zusammen gesetzt ist, welche einen Ring mit 4 bis 12 solcher Einheiten bilden, vorzugsweise mit 4 bis 8 Siloxy-Einheiten, insbesondere zwei oder drei -[Si(R)(A)O]-Einheiten enthaltende Polydimethylsiloxane mit 4 bis 8 Siloxy-Einheiten.

7. Vergussmasse nach einem der Ansprüche 1-6, **dadurch gekennzeichnet, dass** die Polysiloxanverbindung einen Gehalt von bis zu 10 Gew.-%, vorzugsweise etwa 6-8 Gew.-% an cyclischen Verbindungen enthält, welche nur aus -[Si(R)(R)O]-Einheiten, zusammengesetzt sind, vorzugsweise cyclische Dimethylsiloxane mit 4-12, vorzugsweise mit 4 oder 5 Dimethylsiloxyeinheiten.

8. Vergussmasse nach einem der Ansprüche 1-7, **dadurch gekennzeichnet, dass** diese die Polysiloxanverbindung oder ein Gemisch solcher Polysiloxanverbindungen, in einer Menge von 1-20 Gew.-%, vorzugsweise 5-15 Gew.-% und insbesondere in einer Menge von etwa 6-12 Gew.-%, bezogen auf das Gesamtgewicht des in der Mischung anwesenden Epoxidharzes, enthält.

9. Vergussmasse nach einem der Ansprüche 1-8, **dadurch gekennzeichnet, dass** diese aus einem Epoxidharz, einem Härter und gegebenenfalls weiteren Zusatzstoffen bestehen, welche vorzugsweise ausgewählt sind aus der Gruppe enthaltend Beschleuniger, Füllstoffe, Plastifizierungsmittel, Elastifizierungsmittel, Verstärkungsfasern, Flammschutzmittel und Farbstoffe.

10. Vergussmasse nach Anspruch 9, **dadurch gekennzeichnet, dass** diese mindestens einen Füllstoff enthält, vorzugsweise Quarzmehl, Aluminiumoxid und/oder Dolomite, welche gegebenenfalls mit einer Silanisierung versehen sind.

11. Vergussmasse nach Anspruch 9, **dadurch gekennzeichnet, dass** diese als Epoxidharz eine vernetzend wirkende Glycidylverbindung mit mindestens zwei 1,2-Epoxidgruppen im Molekül enthält, vorzugsweise ein Gemisch von Diglycidyl- und Triglycidylverbindungen, vorzugsweise solche, die sich von aromatischen, araliphatischen, cycloaliphatischen, heterocyclischen, heterocyclisch-aliphatischen oder heterocyclisch-aromatischen Dicarbonsäuren mit 6 bis 20, insbesondere 6 bis 12 Ringkohlenstoffatomen oder von aliphatischen Dicarbonsäuren mit 2 bis 10 Kohlenstoffatomen, oder von mehrwertigen aromatischen oder cycloaliphatischen Hydroxylverbindungen ableiten.

12. Vergussmasse nach Anspruch 9, **dadurch gekennzeichnet, dass** diese ein gegebenenfalls substituiertes Epoxidharz der Formel (III): 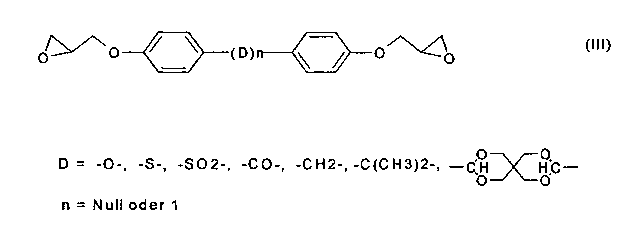 enthält.

13. Vergussmasse nach Anspruch 9, **dadurch gekennzeichnet, dass** diese ein gegebenenfalls substituiertes Epoxidharz der Formel (IV): 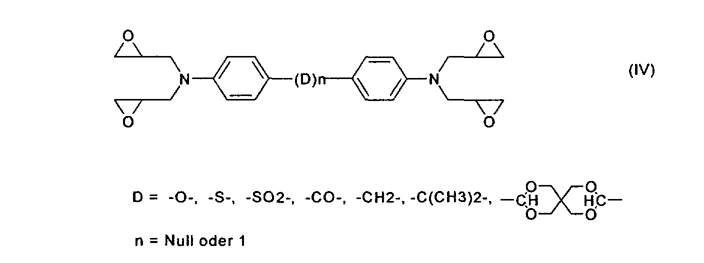 oder der Formel (V): 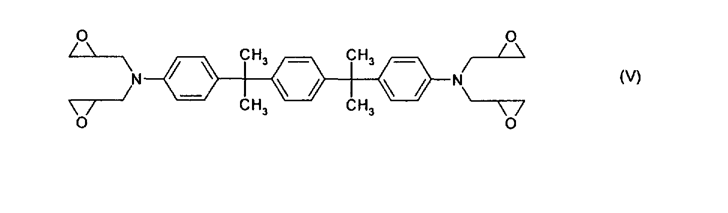 oder der Formel (VI): 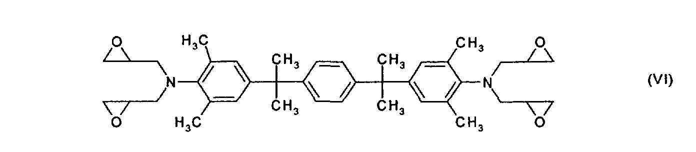 enthält.

14. Vergussmasse nach einem der Ansprüche 1-13, **dadurch gekennzeichnet, dass** diese als Härter eine hydroxylhaltige Verbindung und/oder ein carboxylhaltiges Polymer, vorzugsweise einen carboxylterminierten Polyester und/oder ein carboxylhaltiges Acrylat- und/oder Methacrylatpolymer und/oder ein Carbonsäureanhydrid enthält.

15. Vergussmasse nach Anspruch 14, **dadurch gekennzeichnet, dass** diese als Härter ein Anhydrid von aromatischen, aliphatischen, cycloaliphatischen und heterocyclischen Polycarbonsäuren, vorzugsweise ein Anhydrid von aromatischen Polycarbonsäuren, vorzugsweise Phthalsäureanhydrid und deren substituierte Derivate, Benzol-1,2,4,5-tetracarbonsäuredianhydrid und deren substituierte Derivate, und/oder eine Verbindung der Formel (VII): 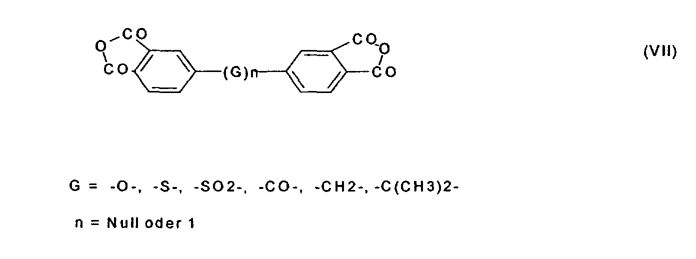 enthält.

16. Verfahren zur Herstellung einer Vergussmasse nach einem der Ansprüche 1-15, **dadurch gekennzeichnet, dass** man das Epoxidharz, den Härter, und die Siloxanverbindung sowie gegebenenfalls anwesende Additive, in beliebiger Reihenfolge mischt.

17. Verfahren zur Herstellung einer Vergussmasse nach einem der Ansprüche 1-15, **dadurch gekennzeichnet, dass** man die Siloxanverbindung zuerst mit dem Epoxidharz mischt und anschliessend mit dieser Vormischung die Vergussmasse herstellt.

18. Verwendung einer Vergussmasse nach den Ansprüchen 1-15 für die Herstellung von Hochspannungsisolierung für den Freilufteinsatz, insbesondere für die Herstellung von Freiluftisolatoren bei Hochspannungsleitungen als Langstab-, Verbund- und Kappenisolatoren oder für Stützisolatoren im Mittelspannungsbereich, für Isolierungen bei Freiluft-Leistungschaltern, Messwandlern, Durchführungen und Ableitern, im Schaltanlagenbau, in Leistungsschaltern, Trockentransformatoren und elektrischen Maschinen.

19. Verwendung einer Vergussmasse nach den Ansprüchen 1-15 als Beschichtungsmaterialien für Transistoren und andere Halbleiterelemente, zum Imprägnieren von elektrischen Bauteilen, als Klebstoff, als Matrixharz für faserverstärkte Kunststoffe oder als Korrosionsschutz für metallische Bauteile.

20. Die gemäss den Ansprüchen 18 und 19 hergestellten hergestellten elektrischen Isolierungen und Bauteile.
